# EUROPEAN PATENT APPLICATION

(11) **EP 4 769 689 A1**
(43) Date of publication of application: **01.07.2026**
(21) Application number: 25762449.4
(22) Date of filing: 18.02.2025
(51) Int. Cl.: H01M 50/131, H01M 50/183, H01M 50/124, H01M 50/119, H01M 50/30, H01M 10/04

(54) **SECONDARY BATTERY AND METHOD OF MANUFACTURING SAME**

(30) Priority: 29.02.2024 KR 20240029900
(71) Applicant: LG Energy Solution, Ltd., Seoul 07335 (KR)
(72) Inventor: PARK, Eun Suk, Daejeon 34122 (KR); HWANG, Ji Young, Daejeon 34122 (KR); LEE, Yu Jin, Daejeon 34122 (KR); JU, Hye Yeong, Daejeon 34122 (KR); KIM, Sang Hun, Daejeon 34122 (KR); YU, Hyung Kyun, Daejeon 34122 (KR)
(74) Representative: Goddar, Heinz J.
(86) International application number: PCT/KR2025/099444
(87) International publication number: WO 2025/183534

(57) **Abstract**

A secondary battery includes: an electrode assembly; a first exterior material enclosing the electrode assembly such that the electrode assembly is sealed; a second exterior material enclosing an outer surface of the first exterior material, wherein at least a portion of the second exterior material is unbonded to the first exterior material; and an electrode lead electrically connected to the electrode assembly and configured to extend from an interior to an exterior of the first exterior material and the second exterior material.

## Description

### TECHNICAL FIELD

### CROSS-REFERENCE TO RELATED APPLICATIONS

This application is based on and claims priority from Korean Patent Application No. 10-2024-0029900, filed on February 29, 2024, with the Korean Intellectual Property Office, the disclosure of which is incorporated herein in its entirety by reference.

### TECHNICAL FIELD

The present disclosure relates to a rechargeable secondary battery and a manufacturing method of the same.

### BACKGROUND ART

In recent years, with the depletion of fossil fuels leading to rising energy source prices and growing concerns about environmental pollution, the demand for eco-friendly alternative energy sources has become an essential factor for future living. Accordingly, research on various power generation technologies, such as solar power, wind power, and tidal power, has been continuously conducted, and there has also been significant interest in power storage devices, such as batteries, to use the generated electric energy more efficiently.

Furthermore, as the development of technology and demand for electronic mobile devices and electric vehicles using batteries grow, the demand for batteries as an energy source rapidly increases, leading to extensive research on batteries capable of meeting various requirements.

Batteries for storing electric energy are generally categorized into primary batteries and secondary batteries. Primary batteries are disposable and intended for single use, whereas secondary batteries are rechargeable and manufactured using materials capable of repeating oxidation and reduction processes between electric current and materials. In secondary batteries, when a reduction reaction occurs on a material due to electric current, the batteries are charged, and when an oxidation reaction occurs on the material, the batteries are discharged. When this charging and discharging is repeated, electricity is generated.

### SUMMARY

### TECHNICAL PROBLEM

The present disclosure provides a secondary battery with improved quality and performance by preventing or suppressing sealing defects and insulation defects, and a method for manufacturing a secondary battery with enhanced manufacturing process efficiency.

### TECHNICAL SOLUTION

A secondary battery according to an embodiment of the present disclosure may include: an electrode assembly; a first exterior material enclosing the electrode assembly such that the electrode assembly is sealed; a second exterior material enclosing an outer surface of the first exterior material, wherein at least a portion of the second exterior material is unbonded to the first exterior material; and an electrode lead electrically connected to the electrode assembly and provided to extend from the interior to the exterior of the first exterior material and the second exterior material.

The first exterior material may have thermal sealability and gas permeability.

The secondary battery may further include an electrolyte accommodated within the interior of the first exterior material along with the electrode assembly.

The second exterior material may have thermal sealability, and may include a sealant layer provided to face the first exterior material.

At least a portion of the sealant layer may be bonded to the first exterior material by sealing.

The second exterior material may be bonded to the sealant layers of the second exterior materials opposite to each other are bonded by sealing such that the first exterior material is sealed.

The second exterior material may include a metal layer including a metallic material, and an insulating layer including an insulating material.

The second exterior material may include a metal layer including stainless steel (SUS), and an outer surface of the metal layer may be coated with nylon.

The second exterior material may include at least one hole formed in a portion thereof.

A secondary battery manufacturing method according to an embodiment of the disclosure may include: (a) a step of sealing a first exterior material accommodating an electrode assembly in a cup portion; (b) a step of charging and discharging the electrode assembly provided in the sealed first exterior material to activate the electrode assembly; (c) a step of discharging gas collected in a gas collection portion of the first exterior material through the activation; (d) a step of removing the gas collection portion of the first exterior material; and (e) a step of enclosing the first exterior material with a second exterior material.

The secondary battery manufacturing method may further include sealing an area between the cup portion and the gas collection portion after the step of (c).

The secondary battery manufacturing method may further include forming at least one hole in a portion of the second exterior material before the step of (e).

In the step of (e), the first exterior material and the second exterior material may be bonded to each other by thermal sealing.

A battery pack according to another aspect of the present disclosure may include the secondary battery according to an aspect of the present disclosure.

A vehicle according to yet another aspect of the present disclosure may include the battery pack according to the another aspect of the present disclosure.

### ADVANTAGEOUS EFFECTS

According to an embodiment of the present disclosure, a secondary battery may include a first exterior material and a second exterior material.

Accordingly, performance degradation of the secondary battery due to sealing defects may be prevented or suppressed.

In addition, wrinkles on the second exterior material caused by gas generated during the activation process may be prevented or suppressed.

As a result, issues such as insulation defects in the secondary battery may be reduced.

According to an embodiment of the present disclosure, the secondary battery may have a hole formed in the second exterior material.

Accordingly, gas generated inside the secondary battery may be efficiently discharged to the exterior.

Through this, functional degradation of the secondary battery may be prevented or suppressed.

In addition, the occurrence of the venting phenomenon of the pouch caused by gas inside the exterior material may be delayed or prevented, thereby improving the safety of the secondary battery.

According to an embodiment of the present disclosure, in the secondary battery manufacturing method, the second exterior material may be bonded after the activation process and the degassing process are completed.

Accordingly, the cost consumed for the removal of a gas collection portion may be reduced, improving the economic efficiency of the process.

Furthermore, the degree of flexibility in hole formation may increase, and bonding of the second exterior material may be facilitated, enhancing the efficiency of the process.

The effects according to the present disclosure are not limited to the features exemplified above, and more diverse effects are included in this specification.

### BRIEF DESCRIPTION OF THE DRAWINGS

The following drawings attached hereto illustrate example embodiments of the present disclosure and, together with the detailed description to be described later, serve to further understand the technical idea of the present disclosure. Therefore, the present disclosure should not be construed as being limited to the matters illustrated in the drawings.
FIG. 1 is a perspective view schematically illustrating a secondary battery according to Embodiment 1 of the present disclosure.
FIG. 2 is a partially cutaway perspective view schematically illustrating the secondary battery according to Embodiment 1 of the present disclosure.
FIG. 3 is a cross-sectional view schematically illustrating a cross-section taken along A-A' of FIG. 1.
FIG. 4 is a perspective view schematically illustrating a secondary battery according to Embodiment 2 of the present disclosure.
FIG. 5 is a flowchart schematically illustrating a secondary battery manufacturing method according to Embodiment 3 of the present disclosure.
FIG. 6 is a plan view schematically illustrating a state where the first exterior material encloses the electrode assembly in the secondary battery manufacturing method according to Embodiment 3 of the present disclosure.
FIG. 7 is a plan view schematically illustrating a state where a gas collection portion is removed in the secondary battery manufacturing method according to Embodiment 3 of the present disclosure.
FIG. 8 is a plan view schematically illustrating a state where the second exterior material encloses the first exterior material in the secondary battery manufacturing method according to Embodiment 3 of the present disclosure.
FIG. 9 is a perspective view illustrating an automobile including a battery pack according to an embodiment of the present disclosure.

In some of the attached drawings, corresponding components are given the same reference numerals. Those skilled in the art would appreciate that the drawings depict elements simply and clearly and have not necessarily been drawn to scale. For example, in order to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### DETAILED DESCRIPTION

Hereinafter, with reference to the accompanying drawings, embodiments of the present disclosure will be described to enable those ordinarily skilled in the art to which the present disclosure pertains to easily implement the embodiments. However, the present disclosure may be implemented in various different forms and is not limited or restricted by the following examples.

In order to clearly describe the present disclosure, detailed descriptions of portions unrelated to the present disclosure or known technologies that may unnecessarily obscure the gist of the present disclosure have been omitted. Additionally, when assigning reference numerals to components in each drawing in this specification, the same or similar reference numerals are assigned to the same or similar components throughout the specification.

In addition, the terms or words used in the specification and claims should not be construed as limited to their ordinary or dictionary meanings, but should be construed as meanings and concepts consistent with the technical idea of the present disclosure based on the principle that an inventor may appropriately define the concepts of terms in order to explain their invention in the best way.

The secondary battery may be classified into, for example, a cylindrical cell, a pouch cell, and a prismatic cell, depending on the shape. Among these, the pouch cell accommodates an electrode assembly, in which a positive electrode, a negative electrode, and a separator are stacked inside a pouch, and the outer portion of the pouch may be sealed during manufacturing.

A pouch cell manufacturing process may include a step of discharging gas collected inside a gas collection portion of the pouch, followed by a step of removing the gas collection portion. In addition, the pouch cell manufacturing process may include a step of resealing the pouch from which the gas collection portion has been removed. During this process, an electrolytic solution may adhere to the area cut for removing the gas collection portion. The electrolytic solution remaining on the cut area may cause poor sealing when resealing the pouch.

The present disclosure provides a secondary battery with improved quality and performance by preventing or suppressing issues of reduced sealability, as well as a manufacturing method for a secondary battery with enhanced process efficiency.

### Embodiment 1

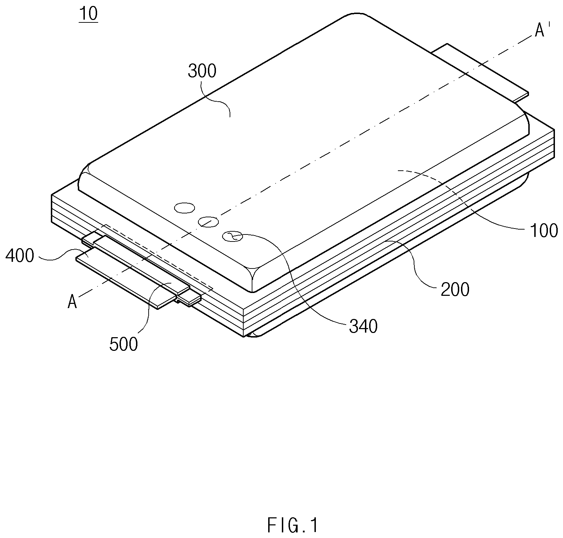

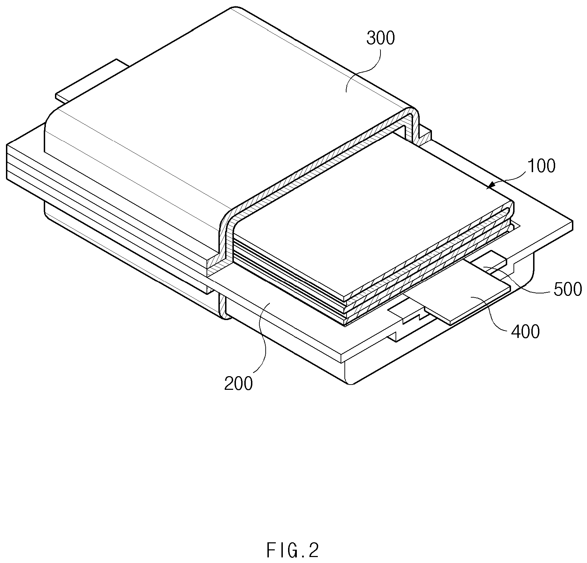

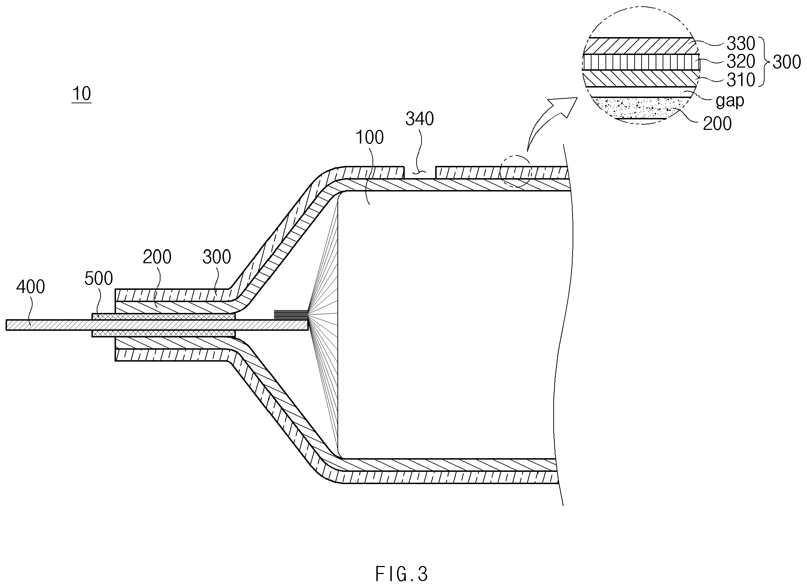

FIG. 1 is a perspective view schematically illustrating a secondary battery 10 according to Embodiment 1 of the present disclosure. FIG. 2 is a partially cutaway perspective view of the secondary battery 10 according to Embodiment 1 of the present disclosure, and FIG. 3 is a cross-sectional view schematically illustrating a cross-section taken along A-A' of FIG. 1.

The secondary battery 10 according to Embodiment 1 of the present disclosure may refer to a rechargeable secondary battery. For example, the secondary battery 10 may have a configuration in which an electrode assembly 100 is accommodated inside a case in the form of exterior material.

The electrode assembly 100 may include a positive electrode, a negative electrode, and a separator. Here, the separator may be disposed between the positive and negative electrodes to physically separate the negative and positive electrodes. The electrode assembly 100 may be in a stacked configuration in which the positive electrode, the negative electrode, and the separator are stacked, or in a jelly-roll configuration in which the positive electrode, the negative electrode, and the separator are wound.

Conventional secondary batteries, in which an electrode assembly is disposed inside a pouch, have a problem in that sealing defects are likely to occur during the manufacturing process, leading to a decrease in the performance of the secondary battery. Conventional pouch-type secondary batteries may include a process of removing the space where gas generated during the activation process is collected and resealing the pouch. In the manufacturing process of conventional pouch-type secondary batteries, sealing defects may occur due to the electrolyte solution remaining on the sealing portions of the pouch, and these sealing defects may lead to insulation defects. Insulation defects may cause a decrease in the performance of the completed secondary batteries.

As an example of a configuration to prevent or suppress problems such as insulation defects, a secondary battery 10 according to Embodiment 1 of the present disclosure may include a first exterior material 200 and a second exterior material 300 for sealing an electrode assembly 100.

Referring to FIGS. 1 and 2, the secondary battery 10 according to Embodiment 1 of the present disclosure may have a configuration in which the first exterior material 200 and the second exterior material 300 accommodate the electrode assembly 100. The first exterior material 200 may enclose the electrode assembly 100 such that the electrode assembly 100 is sealed. In addition, the second exterior material 300 may enclose the outer surface of the first exterior material 200.

For example, the first exterior material 200 may primarily seal the electrode assembly 100, and the second exterior material 300 may secondarily seal the electrode assembly 100. Unlike conventional pouches having multiple layers, the first exterior material 200 and the second exterior material 300 of the secondary battery 10 according to Embodiment 1 of the present disclosure may have separate configurations. Thus, the first exterior material 200 and the second exterior material 300 may be disposed such that at least some portions thereof have a gap therebetween. For example, in the first exterior material 200 and the second exterior material 300, the portions that are not sealed for sealing the electrode assembly 100 may not be bonded. In other words, the first exterior material 200 and the second exterior material 300 may be at least partially unbonded.

The interior of the first exterior material 200, which primarily seals the electrode assembly 100, may accommodate the electrolyte. For example, the electrolyte may be an electrolytic solution. Since the first exterior material 200 seals the electrode assembly 100 and the electrolytic solution in an accommodated state, the second exterior material 300 may prevent or suppress a decrease in sealability caused by the electrolytic solution. Accordingly, the secondary battery 10 according to Embodiment 1 of the present disclosure may prevent or suppress a decrease in performance caused by sealing defects. As a result, the secondary battery 10 may reduce the occurrence of problems such as insulation defects. Furthermore, the secondary battery 10 may improve sealing performance for the electrode assembly 100 and the electrolytic solution through double sealing provided by the first exterior material 200 and the second exterior material 300.

Meanwhile, the secondary battery 10 may include an electrode lead 400. The electrode lead 400 may be electrically connected to the electrode assembly 100. The electrode lead 400 may be provided to extend from the interior of the first exterior material 200 and the second exterior material 300 to the exterior. Through the electrode lead 400 protruding outside the first exterior material 200 and the second exterior material 300, the secondary battery 10 may supply electrical energy to the exterior. Accordingly, the electrode lead 400 may be a conductor.

The secondary battery 10 may further include a lead film 500. The lead film 500 may cover the electrode lead 400 to insulate the first exterior material 200 and the electrode lead 400 from each other. For example, the lead film 500 may be disposed on both sides of the electrode lead 400 to cover the electrode lead 400. A pair of lead films 500 may be provided and respectively disposed on both sides of the electrode lead 400.

The lead film 500 may include a thermally sealable material. Accordingly, the lead film 500 and the first exterior material 200 may be bonded through sealing.

The first exterior material 200 of the secondary battery 10 according to Embodiment 1 of the present disclosure may be thermally sealable. For example, the first exterior material 200 may be made of a thermally sealable material. Thus, the first exterior material 200 may be sealed to accommodate the electrode assembly 100 therein. In addition, the first exterior material 200 may be bonded to the lead film 500 through sealing.

In order to ensure thermal sealability, the first exterior material 200 may be made of one or more materials selected from polyethylene, polypropylene, polycarbonate, polyethylene terephthalate, polyvinyl chloride, acrylic polymers, polyacrylonitrile, polyimide, polyamide, cellulose, aramid, nylon, polyester, poly(p-phenylene benzobisoxazole), polyarylate, Teflon, and glass fiber. For example, the first exterior material 200 may be made of polyolefin resin such as polypropylene (PP) or polyethylene (PE).

The second exterior material 300 of the secondary battery 10 according to Embodiment 1 of the present disclosure may include multiple layers. For example, the second exterior material 300 may include a thermally sealable sealant layer 310.

Referring to FIG. 3, the sealant layer 310 of the second exterior material 300 may be provided to face the first exterior material 200. For example, the sealant layer 310 may be disposed as the innermost layer among the multiple layers included in the second exterior material 300.

Since the first exterior material 200 and the second exterior material 300 are separate exterior materials, all portions may not be bonded to each other. Thus, some portions of the first exterior material 200 and the second exterior material 300 may be disposed to have a gap therebetween. For example, the sealant layer 310 of the second exterior material 300 and the first exterior material 200 may be disposed to partially have a gap therebetween or not be bonded in some areas. FIG. 3 is an enlarged view illustrating a portion where the first exterior material 200 and the sealant layer 310 are disposed to have a gap therebetween.

Meanwhile, some portions of the first exterior material 200 may be bonded to the sealant layer 310 of the second exterior material 300 through sealing. For example, the portions of the first exterior material 200 that are sealed for sealing the electrode assembly 100 may be bonded to the sealant layer 310 of the second exterior material 300 through sealing. The first exterior material 200 and the sealant layer 310 may be sealed by heat and pressure.

In order to ensure thermal sealability, the sealant layer 310 of the second exterior material 300 may be made of one or more materials selected from polyethylene, polypropylene, polycarbonate, polyethylene terephthalate, polyvinyl chloride, acrylic polymers, polyacrylonitrile, polyimide, polyamide, cellulose, aramid, nylon, polyester, poly(p-phenylene benzobisoxazole), polyarylate, Teflon, and glass fiber. For example, the sealant layer 310 may be made of a polyolefin resin such as polypropylene (PP) or polyethylene (PE).

Referring to FIG. 3, the second exterior material 300 of the secondary battery 10 according to Embodiment 1 of the present disclosure may include a metal layer 320 and an insulating layer 330.

The metal layer 320 of the second exterior material 300 may include a metallic material. For example, the metal layer 320 may include aluminum (Al). Since the second exterior material 300 includes the metal layer 320, the structural rigidity of the secondary battery 10 may be improved.

The insulating layer 330 of the second exterior material 300 may include an insulating material. Referring to FIG. 3, the insulating layer 330 may be disposed as the outermost layer among the multiple layers included in the second exterior material 300. For example, the insulating layer 330 may include a nylon-based resin. The insulating layer 330 may insulate the metal layer 320 from the exterior.

Meanwhile, as the secondary battery 10 undergoes repeated charging and discharging, gas may be generated, causing the internal pressure of the first exterior material 200 to increase. When the internal pressure of the first exterior material 200 increases excessively, for example, venting may occur, causing the secondary battery 10 to lose functionality.

For example, the interior of the first exterior material 200 of the secondary battery 10 may accommodate an electrolytic solution along with the electrode assembly 100. At this time, residual moisture in the electrolytic solution inside the first exterior material 200 of the secondary battery 10 or moisture infiltrated from the outside may react with lithium salts to generate HF, and gases such as carbon dioxide, carbon monoxide, ethylene, and methane may be generated due to, for example, the decomposition of the electrolytic solution. In addition, depending on the material of the positive electrode included in the electrode assembly 100 of the secondary battery 10, hydrogen and HF may be further generated, which may result in overheating due to overcharging and internal short circuits during charging and discharging. As a result, a large amount of gas may be generated inside the first exterior material 200. Such gas may increase the internal pressure of the first exterior material 200, and the increased pressure may cause swelling of the first exterior material 200 or venting, where the first exterior material 200 partially ruptures.

The secondary battery 10 according to Embodiment 1 of the present disclosure may include a structure capable of discharging internal gas to the exterior to prevent or suppress venting. For example, the first exterior material 200 may have gas permeability. For example, the first exterior material 200 may be made of a gas-permeable material. Thus, gas generated inside the first exterior material 200 may permeate through the first exterior material 200 and be discharged to the exterior of the first exterior material 200.

The secondary battery 10 may include the first exterior material 200 and the second exterior material 300. Accordingly, when the gas permeating through the first exterior material 200 is not discharged to the exterior of the second exterior material 300, the second exterior material 300 may swell or rupture.

As an example of a configuration for discharging gas, the second exterior material 300 of the secondary battery 10 according to Embodiment 1 of the present disclosure may have a hole 340 formed therein. For example, at least one hole 340 may be formed in a portion of the second exterior material 300.

As described above, the gas inside the first exterior material 200 may permeate through the gas permeable first exterior material 200. In contrast, the gas that has permeated through the gas-permeable first exterior material 200 may not permeate through the second exterior material 300, which includes the metal layer 320. At this time, the gas that has permeated through the first exterior material 200 may be discharged to the exterior of the secondary battery 10 through the hole 340 of the second exterior material 300.

The hole 340 formed in the second exterior material 300 may vary in shape, size, and number. For example, the hole 340 may be formed at a portion corresponding to the portion of the first exterior material 200 that accommodates the electrode assembly 100. In addition, multiple holes 340 may be formed.

The secondary battery 10 may have a configuration in which the first exterior material 200 seals the electrode assembly 100, and then the second exterior material 300 encloses the first exterior material 200. At this time, since only the periphery of the second exterior material 300 is bonded to the first exterior material 200, a space (gap) may be formed between the first exterior material 200 and the second exterior material 300 in the unbonded portions. Gas that permeates through the first exterior material 200 may travel along the space (gap) between the first exterior material 200 and the second exterior material 300 and be discharged to the exterior through the hole 340 formed in the second exterior material 300. Thus, the positions where the holes 340 may be formed in the second exterior material 300 may be more diverse.

In addition, during the manufacturing process of the secondary battery 10, the second exterior material 300 may enclose the first exterior material 200 sealed in the state where the electrode assembly 100 is accommodated therein. At this time, the holes 340 may be formed in the second exterior material 300 before the second exterior material encloses the first exterior material 200. Therefore, the degree of flexibility regarding the positions, number, and shapes of the holes 340 in the second exterior material 300 may be increased.

The secondary battery 10 according to Embodiment 1 of the present disclosure may efficiently discharge gas generated inside the secondary battery 10 to the exterior, as the second exterior material 300 has the holes 340 formed therein. Through this, the secondary battery 10 may prevent or suppress problems of functional degradation. In addition, since the secondary battery 10 according to Embodiment 1 of the present disclosure has the first exterior material 200 and the second exterior material 300 installed as described above, the occurrence of venting caused by internal gas may be delayed or prevented, thereby improving safety.

### Embodiment 2

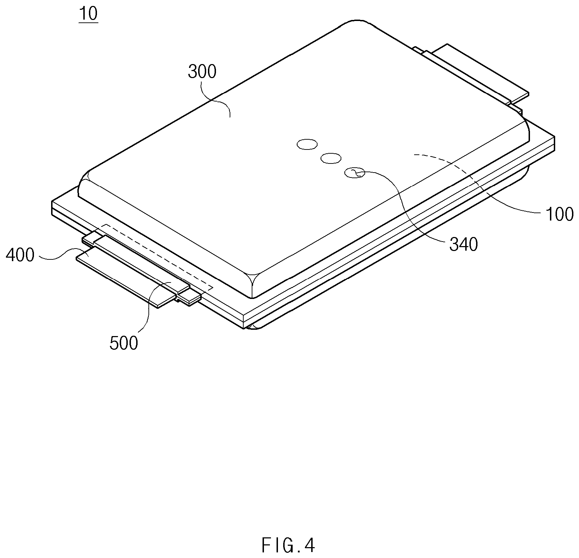

FIG. 4 is a perspective view schematically illustrating a secondary battery 10 according to Embodiment 2 of the present disclosure.

Hereinafter, detailed descriptions of configurations identical to those of the secondary battery 10 according to Embodiment 1 of the present disclosure will be omitted, and only the differences will be described.

The secondary battery 10 according to Embodiment 2 of the present disclosure may differ from the secondary battery 10 according to Embodiment 1 of the present disclosure in the form of the second exterior material 300.

The second exterior material 300 of the secondary battery 10 according to Embodiment 2 of the present disclosure may include multiple layers. For example, the second exterior material 300 may include a sealant layer 310 and a metal layer 320.

The sealant layer 310 of the second exterior material 300 may be thermally sealable. For example, the sealant layer 310 may include a thermally sealable material.

The metal layer 320 of the second exterior material 300 may include a metallic material. For example, the metal layer 320 of the second exterior material 300 may include stainless steel (SUS). In addition, the metal layer 320 may have its outer surface coated with an insulating material. As an example, the outer surface of the metal layer 320 may be coated with nylon. Here, the outer surface of the metal layer 320 may refer to the surface opposite to the surface facing the sealant layer 310.

Referring to FIG. 4, in the secondary battery 10 according to Embodiment 2 of the present disclosure, the sealant layers 310 of the second exterior materials 300 opposite to each other may be bonded to seal the first exterior material 200. For example, the opposing sealant layers 310 of the second exterior material 300 may be bonded through sealing to ensure that the first exterior material 200 is sealed. For example, the first exterior material 200 may seal the electrode assembly 100 accommodated therein, and the second exterior material 300 may seal the first exterior material 200 therein.

As an example, the second exterior material 300 may cover the first exterior material 200, which accommodates the electrode assembly 100, from both sides. At this time, the peripheral portion of the second exterior material 300 may be sealed through thermal sealing. Here, the sealant layer 310 disposed at the peripheral portion of the second exterior material 300 may be sealed.

In the secondary battery 10 according to Embodiment 2 of the present disclosure, the second exterior material 300 may not be bonded to the first exterior material 200, and the opposing portions of the second exterior material 300 may be bonded to each other. Accordingly, the first exterior material 200 may be accommodated inside the second exterior material 300 in the state where it is invisible from the outside (see, *e*.*g*., FIG. 4).

Since the first exterior material 200 is sealed in the state where it is accommodated inside the second exterior material 300, even when a crack occurs in the first exterior material 200, for example, the electrolytic solution will not leak out of the second exterior material 300. Thus, the stability of the secondary battery 10 may be improved.

Referring to FIG. 4, the second exterior material 300 of the secondary battery 10 according to Embodiment 2 of the present disclosure may have holes 340 with a different shape compared to Embodiment 1. However, this is merely an example, and the shape, position, and number of the holes 340 may vary.

In addition to the forms of the second exterior material 300 described in various embodiments of the present disclosure, the form of the second exterior material 300 may vary to achieve structural stability and efficient gas discharge.

### Embodiment 3

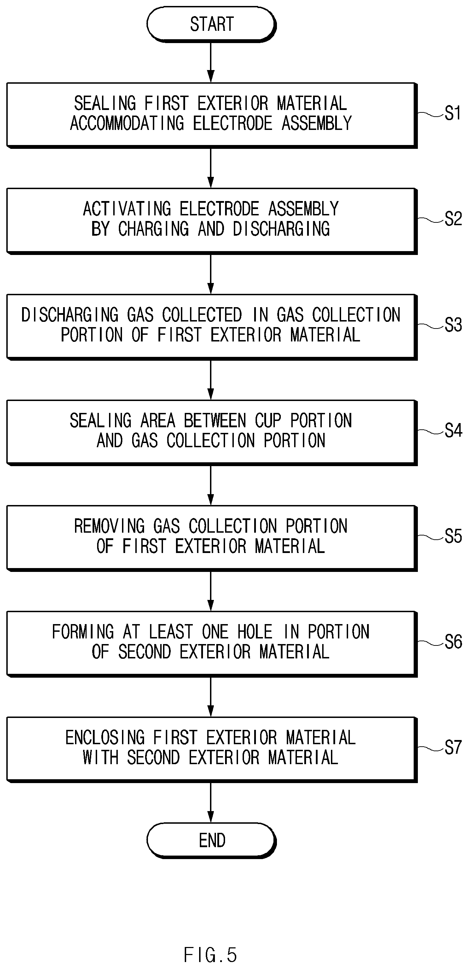

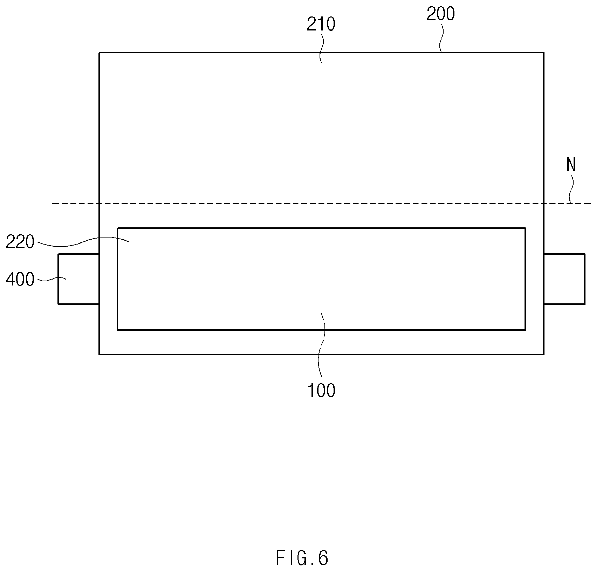

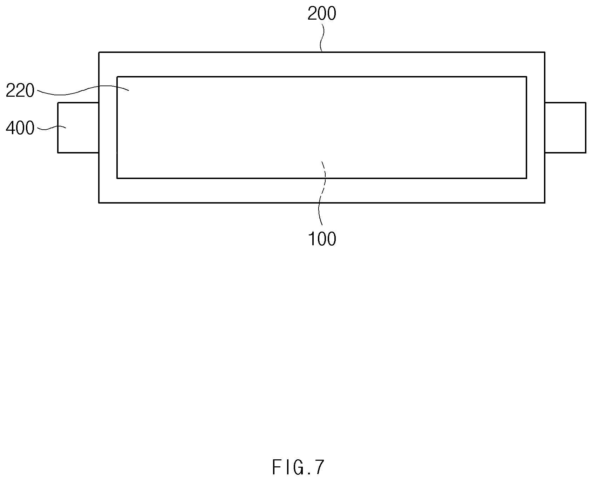

FIG. 5 is a flowchart schematically illustrating a secondary battery manufacturing method according to Embodiment 3 of the present disclosure. FIG. 6 is a plan view schematically illustrating a state where the first exterior material 200 encloses the electrode assembly 100 in the secondary battery manufacturing method according to Embodiment 3 of the present disclosure, and FIG. 7 is a plan view schematically illustrating a state where a gas collection portion 210 is removed in the secondary battery manufacturing method according to Embodiment 3 of the present disclosure.

Referring to FIGS. 5 and 6, the secondary battery 10 manufacturing method according to Embodiment 3 of the present disclosure may include a step of sealing the first exterior material 200 that accommodates the electrode assembly 100 (S1). Here, the first exterior material 200 may refer to an exterior material that includes a gas collection portion 210 and a cup portion 220. For example, the first exterior material 200 described in Embodiment 3 of the present disclosure may differ in form from the first exterior material 200 described in the preceding embodiments in that it includes the gas collection portion 210. However, if necessary, it may also be in the same form as the first exterior material 200 described in the preceding embodiments. The cup portion 220 may refer to a space in which the electrode assembly 100 is disposed, and the gas collection portion 210 may be provided to be spaced apart from the cup portion 220.

Referring to FIG. 6, the first exterior material 200 may be sealed in the state where the electrode assembly 100 is accommodated in the cup portion 220. For example, the cup portion 220 may accommodate the electrode assembly 100 and an electrolytic solution.

Next, a step of activating the electrode assembly 100 disposed inside the sealed first exterior material 200 by charging and discharging (S2) may be performed. Through this, electrical properties may be imparted to the electrode assembly 100. In the secondary battery manufacturing method according to Embodiment 3 of the present disclosure, the electrode assembly 100 may be activated in a state sealed only with the first exterior material 200. For example, in the secondary battery manufacturing method according to Embodiment 3 of the present disclosure, after the electrode assembly 100 is sealed with the first exterior material 200, the activation may proceed while the second exterior material 300 is applied.

Meanwhile, during the activation of the electrode assembly 100, gas may be generated inside the first exterior material 200. The gas generated during the activation may be collected in the gas collection portion 210 of the first exterior material 200. Accordingly, a step of discharging the gas collected in the gas collection portion 210 of the first exterior material 200 through activation (S3) may be performed. For example, in the secondary battery manufacturing method according to Embodiment 3 of the present disclosure, after the activation is performed with only the first exterior material 200 enclosing the electrode assembly 100, the gas collected in the gas collection portion 210 may be removed or discharged.

The method for discharging the gas collected in the gas collection portion 210 may vary. For example, the gas may be discharged by forming one or more holes in the gas collection portion 210.

After the gas collected in the gas collection portion 210 is discharged, a step of sealing the area between the gas collection portion 210 and the cup portion 220 (S4) may be performed. For example, the area between a tear line N formed in the gas collection portion 210 and the cup portion 220 may be sealed. In another example, the first exterior material may be sealed along the tear line N.

Subsequently, a step of removing the gas collection portion 210 of the first exterior material 200 (S5) may be performed. For example, in the secondary battery manufacturing method according to Embodiment 3 of the present disclosure, a portion of the first exterior material 200 may be removed.

The first exterior material 200 may be thermally sealable and gas-permeable. For example, the first exterior material may be made of a polyolefin resin such as polypropylene (PP) or polyethylene (PE). While a pouch film including multiple layers is to be removed in conventional secondary battery manufacturing processes, in the secondary battery manufacturing method according to Embodiment 3 of the present disclosure, only a portion of the relatively inexpensive first exterior material 200 is removed, thereby reducing the costs associated with removing the gas collection portion 210. As a result, the economic efficiency of the secondary battery manufacturing process may be improved.

In the second battery manufacturing method according to Embodiment 3 of the present disclosure, the first exterior material 200 may have an arbitrary tear line N formed between the gas collection portion 210 and the cup portion 220 (see, *e*.*g*., FIG. 6). Through cutting along the tear line N, the gas collection portion 210 may be removed. After the gas collection portion 210 is removed, the first exterior material 200 may remain with only the cup portion 220 containing the electrode assembly 100 (see, *e*.*g*., FIG. 7).

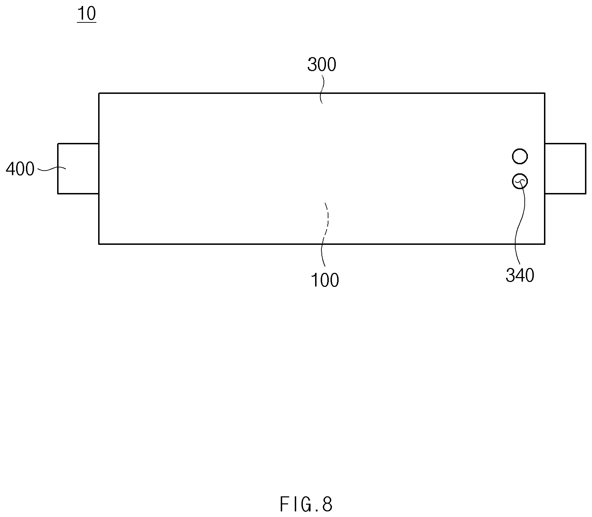

FIG. 8 is a plan view schematically illustrating a state where the second exterior material 300 encloses the first exterior material 200 in the secondary battery manufacturing method according to Embodiment 3 of the present disclosure.

After the gas collection portion 210 is removed, a step of enclosing the first exterior material 200 with the second exterior material 300 (S7) may be performed. For example, by enclosing the first exterior material 200 with the second exterior material 300, the electrode assembly 100 may be sealed again, for example, in double layers. For example, the second exterior material 300 may be coupled to the first exterior material 200 to reseal the electrode assembly 100. Here, the first exterior material 200 and the second exterior material 300 may be bonded to each other through thermal sealing. In the secondary battery manufacturing method according to Embodiment 3 of the present disclosure, the first exterior material 200 and the second exterior material 300 may be partially bonded. Thus, the first exterior material 200 and the second exterior material 300 may have at least some unbonded portions.

In the secondary battery manufacturing method according to Embodiment 3 of the present disclosure, activation and gas removal may be performed while the first exterior material 200 accommodates the electrode assembly 100 and the electrolytic solution. Accordingly, the possibility of sealing defects caused by the electrolytic solution during the sealing process of the second exterior material 300 may be reduced. As a result, the possibility of insulation defects caused by sealing defects may also be reduced. In addition, the sealing of the second exterior material 300 may be facilitated, thereby improving the efficiency of the secondary battery manufacturing process.

In order to efficiently discharge gas generated during the use of the completed secondary battery 10, the secondary battery manufacturing method according to Embodiment 3 of the present disclosure may further include a step of forming at least one hole 340 in a portion of the second exterior material 300 (S6).

For example, the step of forming the hole 340 in the second exterior material 300 (S6) may be performed before the step of enclosing the first exterior material 200 with the second exterior material 300 (S7). Since the hole 340 in the second exterior material 300 is formed before the sealing of the second exterior material 300 in the secondary battery manufacturing method according to Embodiment 3 of the present disclosure, the degree of flexibility in forming the hole 340 may be increased. Meanwhile, in another embodiment, the hole 340 in the second exterior material 300 may also be formed after the step of enclosing the first exterior material 200 with the second exterior material 300 (S7).

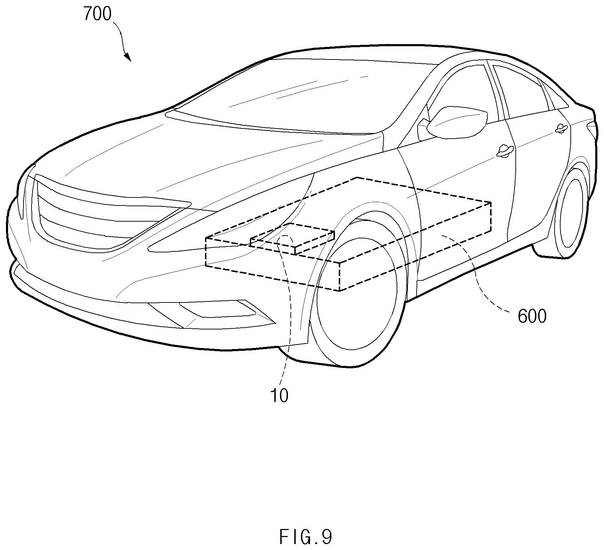

Referring to FIG. 9, multiple secondary batteries 10 according to an embodiment of the present disclosure may be coupled to form a battery module or a battery pack 600. The battery pack 600 may be included in a vehicle 700, such as an electric vehicle (EV) or a hybrid vehicle (HV). Here, the secondary battery 10 described above may be applied to the secondary batteries 10. The battery pack 600 may supply power to the motor through an inverter provided in the vehicle 700, thereby driving the vehicle 700. The battery pack 600 may include a battery management system (not illustrated). For example, the vehicle 700 may include a battery management system. In this case, the battery management system may be an onboard system included in the vehicle 700.

While the present disclosure has been described with limited embodiments and drawings, the present disclosure is not limited thereto, and various embodiments may be made by one of ordinary skill in the art within the scope equivalent to the technical idea of the present disclosure and the claims described set forth below.

## Claims

1. A secondary battery comprising:
an electrode assembly;
a first exterior material enclosing the electrode assembly such that the electrode assembly is sealed;
a second exterior material enclosing an outer surface of the first exterior material, wherein at least a portion of the second exterior material is unbonded to the first exterior material; and
an electrode lead electrically connected to the electrode assembly and provided to extend from an interior to an exterior of the first exterior material and the second exterior material.

2. The secondary battery of claim 1, wherein the first exterior material has thermal sealability and gas permeability.

3. The secondary battery of claim 1, further comprising:
an electrolyte accommodated within the interior of the first exterior material along with the electrode assembly.

4. The secondary battery of claim 1, wherein the second exterior material has thermal sealability and includes a sealant layer provided to face the first exterior material.

5. The secondary battery of claim 4, wherein at least a portion of the sealant layer is bonded to the first exterior material by sealing.

6. The secondary battery of claim 4, wherein the sealant layers of the second exterior materials opposite to each other are bonded by sealing such that the first exterior material is sealed.

7. The secondary battery of claim 1, wherein the second exterior material includes:
a metal layer including a metallic material; and
an insulating layer including an insulating material.

8. The secondary battery of claim 1, wherein the second exterior material includes: a metal layer including stainless steel (SUS), and
an outer surface of the metal layer is coated with nylon.

9. The secondary battery of claim 1, wherein a portion of the second exterior material includes at least one hole formed therein.

10. A manufacturing method of a secondary battery, the manufacturing method comprising:
(a) a step of sealing a first exterior material accommodating an electrode assembly in a cup portion;
(b) a step of charging and discharging the electrode assembly provided in the sealed first exterior material to activate the electrode assembly;
(c) a step of discharging gas collected in a gas collection portion of the first exterior material through the activation;
(d) a step of removing the gas collection portion of the first exterior material; and
(e) a step of enclosing the first exterior material with a second exterior material.

11. The manufacturing method of a secondary battery of claim 10, further comprising:
a step of sealing between the cup portion and the gas collection portion after the step of (c).

12. The manufacturing method of a secondary battery of claim 10, further comprising:
a step of forming at least one hole in a portion of the second exterior material before the step of (e).

13. The manufacturing method of a secondary battery of claim 10, wherein, in the step of (e), the first exterior material and the second exterior material are bonded to each other by thermal sealing.

14. A battery pack comprising the secondary battery of claim 1.

15. A vehicle comprising the battery pack of claim 14.
